# NEUE EUROPÄISCHE PATENTSCHRIFT

(11) **EP 1 300 061 B2**
(45) Veröffentlichungstag und Bekanntmachung des Hinweises auf die Entscheidung über den Einspruch: **12.06.2013**
(45) Hinweis auf die Patenterteilung: 31.05.2006
(21) Anmeldenummer: 02021479.7
(22) Anmeldetag: 25.09.2002
(51) Int. Cl.: A01B 79/00

(54) **Verfahren und Vorrichtung zur Bestimmung von Feldbearbeitungsparametern**
Method and device for determining field working parameter
Procédé et dispositif pour la détermination des paramètres pour les travaux de champs

(30) Priorität: 27.09.2001 DE 10147688
(43) Veröffentlichungstag der Anmeldung: 09.04.2003
(73) Patentinhaber: Gerbrüder Pöttinger GmbH, 86899 Landsberg a. Lech (DE)
(72) Erfinder: Baldinger, Markus, 4084 St. Agatha (AT)
(74) Vertreter: Gossel, Hans K.

(56) Entgegenhaltungen:
- EP-A- 0 838 141
- EP-A- 1 169 902
- EP-A1- 0 181 308
- WO-A1-82/01354
- DE-A- 19 804 740
- DE-A1- 3 720 429
- DE-A1- 19 934 882
- US-A- 5 557 510
- STONE, MARVIN L.: 'ISO 11783: An electronic communication protocol for agricultural equipment' ASAE AGRICULTURAL EQUIPMENT TECHNOLOGY CONFERENCE, 7-10 FEBRUARY 1999 Nr. 913C1798, 23 Februar 1999, LOUISVILLE USA, Seiten 1 - 17
- DEUTSCHE LANDWIRTSCHAFTS-GESELLSCHAFT E.V.: 'Landwirtschaftliches BUS-System (LBS)' MERKBLATT Bd. 317, November 1999, FRANKFURT A. M.,
- J. MARQUERING, B. SCHEUFLER, HASBERGEN: 'Teilflächenspezifische Düngerausbringung, Intelligente Verknüpfung von Betriebsdaten und Gerätespezifischen Technologien' LANDTECHNIK Bd. 2, Nr. 97, Seiten 78 - 79
- 'Synthèse des besoins en électronique outils' CEMAGREF 25 September 1989, Seiten 1 - 5
- 'Les liaisons tracteur-machine' SITMA LIAISON Bd. 12, Nr. 2/2, Oktober 1990, Seiten 13 - 18
- 'Présentation "liaison électronique" à la journée des responsables techniques du SYGMA du 18/06/1997' Seiten 1 - 6
- vol. 'Broschüre Amazone Intelligenter Pflanzenbau mit Druckvermerk 03/99'

## Beschreibung

Die vorliegende Erfindung betrifft ein Verfahren sowie eine Vorrichtung zur Bestimmung von Feldbearbeitungsparametern betreffend eine Feldbearbeitung durch einen Schlepper und eine davon gezogene Landmaschine in Form eines Pflugs, wobei von einem an dem Schlepper vorgesehenen Schlepperrechner und damit verbundenen Erfassungsmitteln während der Feldbearbeitung Betriebsparameter des Schleppers erfasst und bereitgestellt werden und von einem an der Landmaschine vorgesehenen Maschinenrechner und damit verbundenen Erfassungsmitteln Betriebsparameter der Landmaschine erfasst werden.

Bei elektronisch steuerbaren Pflügen, wie sie z.B. aus der EP-A-0 838 141 bekannt sind, wurde bereits vorgeschlagen, an dem Pflug einen Jobrechner vorzusehen und mit einem Bedienungs- und Anzeigeterminal zu verbinden, das in der Schlepperkabine angeordnet ist und die Steuerung des Pflugs vom Schlepper aus erlaubt. Entsprechende Eingabebefehle an dem Terminal in der Schlepperkabine werden an den Jobrechner am Pflug übertragen, der sodann die entsprechenden Stellorgane insbesondere in Form von Hydraulikzylindem am Pflug ansteuert. Insbesondere können bei einem solchen Pflug Betriebsparameter wie Schnittbreite, Zugpunkt, Vorfurche, Sturz, Schnitttiefe, Wendestellung und/oder Transportstellung eingestellt werden. Die eingestellten Betriebsparameter können am Display des Bedienungs- und Anzeigeterminals angezeigt werden, um den Schlepperfahrer über die aktuell eingestellten Werte zu informieren.

Die genannte Informationsmöglichkeit über das Display in der Schlepperkabine ist jedoch unzureichend. Es wäre wünschenswert, eine umfassendere Information betreffend die Feldbearbeitung bereitzustellen und eine weiter verfeinerte Steuerung des Pflugs zu gestatten.

Der vorliegenden Erfindung liegt daher die Aufgabe zugrunde, ein verbessertes Verfahren sowie eine verbesserte Vorrichtung der eingangs genannten Art zu schaffen, die Nachteile des Standes der Technik vermeiden und letzteren in vorteilhafter Weise weiterbilden. Vorzugsweise sollen die Bereitstellung der Informationen über die erfolgte Feldbearbeitung und die Steuerungsmöglichkeiten der Landmaschine verbessert werden.

In verfahrenstechnischer Hinsicht wird die genannte Aufgabe durch ein Verfahren gemäß Patentanspruch 1 gelöst. In vorrichtungstechnischer Hinsicht wird die genannte Aufgabe durch eine Vorrichtung nach Anspruch 7 gelöst. Bevorzugte Ausgestaltungen der Erfindung sind Gegenstand der Unteransprüche.

Es ist also vorgesehen, die vom Schlepperrechner bereitgestellten Betriebsparameter des Schleppers automatisch auf den Maschinenrechner zu übertragen, die übertragenen Betriebsparameter des Schleppers mit den erfassten Betriebsparametern der Landmaschine durch den Maschinenrechner miteinander zu verknüpfen und aus der Verknüpfung der Betriebsparameter des Schleppers mit den Betriebsparametern der Landmaschine die gewünschten Feldbearbeitungsparameter zu bestimmen. Der Schlepper bzw. der entsprechende Schlepperrechner kann allgemein konfiguriert bleiben, d. h. er braucht keine speziellen Programme zur Auswertung der jeweiligen angebauten Landmaschine, die von Hersteller und Typ her unterschiedlich sind, da die Verarbeitung der Betriebsparameter sowohl des Schleppers als auch der Landmaschine durch den Jobrechner an der Landmaschine erfolgen. Dennoch können zur Bestimmung der Feldbearbeitungsparameter sowohl die Betriebsparameter des Schleppers als auch die Betriebsparameter der Landmaschine herangezogen werden, wodurch die Feldbearbeitung bzw. die diese charakterisierenden Parameter umfassender ermittelt werden können.

Insbesondere können anhand der am Schlepper bestimmten Betriebsparameter und der an der Landmaschine bestimmten Betriebsparameter als Feldbearbeitungsparameter diverse Daten betreffend das Arbeitsergebnis bzw. die Arbeitsleistung bestimmt werden. Es werden eine bearbeitete Fläche und Vorzugsweise eine bei der Feldbearbeitung erzielte Flächenleistung, d. h. die bearbeitete Fläche pro Zeiteinheit bestimmt. Aus den Schlepper-Betriebsparametern und den Landmaschinen-Betriebsparametern können die Arbeitsleistung bestimmende Parameter wie die Tagesstunden, die mit der jeweiligen Landmaschine gearbeitet wurden, die abgearbeitete Tagesfläche, die Gesamtstundenzahl, die gesamte, mit der jeweiligen Landmaschine bearbeitete Fläche und/oder die Flächenleistung pro Zeiteinheit als charakteristische Feldbearbeitungsparameter bestimmt werden.

Es werden hierzu von dem Schlepperrechner eine bei der Flächenbearbeitung zurückgelegte Wegstrecke, vorzugsweise ein Geschwindigkeitssignal und ein Zeitsignal bereitgestellt. Von Seiten der Landmaschine wird als Betriebsparameter die effektive Arbeitsbreite der Landmaschine quer zur Fahrtrichtung bereitgestellt. Aus dem Produkt des Geschwindigkeitssignals, des Zeitsignals und der Schnittbreite wird von dem Jobrechner an der Landmaschine die bearbeitete Fläche bestimmt. Die Flächenleistung, d. h. die bearbeitete Fläche in Hektar pro Zeiteinheit/Stunde wird entsprechend bestimmt.

Es werden die Zeiten bzw. Intervalle erfasst, in denen die Landmaschine aktiv ist. Es werden für die Berechnung der Arbeitsleistung keine Leerfahrten berücksichtigt, in denen der Schlepper zwar ein Geschwindigkeitssignal liefert, die Landmaschine jedoch leer über das Feld oder die Straße fährt. Hierzu kann beispielsweise eine Zugkraft bestimmt werden. Es werden eine aktuelle Arbeitsstellung der Landmaschine, vorzugsweise eine die Arbeitsstellung bestimmende Hubwerksposition erfasst und daraus die Intervalle, in denen die Landmaschine aktiv arbeitet, bestimmt. Der Jobrechner an der Landmaschine berücksichtigt bei seiner Berechnung der Arbeitsleistung nur die Zeiten, in denen die Landmaschine auch tatsächlich das Feld bearbeitet.

In Weiterbildung der Erfindung können weitere Feldbearbeitungsparameter bestimmt werden. So ist es z. B. möglich, neben der Schnittbreite auch eine Schnitttiefe landmaschinenseitig zu erfassen, so dass von dem Jobrechner unter Berücksichtigung der vom Schlepperrechner bereitgestellten Schlepper-Betriebsparametern auch das Volumen des bearbeiteten Bodens bestimmt werden kann. Andererseits können vom Schlepperrechner weitere Betriebsdaten des Schleppers wie z. B. Kraftstoffverbrauch bereitgestellt werden, so dass der Jobrechner der Landmaschine auch weitere Feldbearbeitungsgrößen wie Energieeinsatz pro Bearbeitungsfläche bestimmen kann. Die Bestimmung weiterer Feldbearbeitungsparameter in Abhängigkeit von schlepperseitig erfassten Betriebsparametern und landmaschinenseitig erfassten Betriebsparametern ist möglich.

In Weiterbildung der Erfindung werden die Feldbearbeitungsdaten unmittelbar während der Feldbearbeitung bestimmt, von dem Maschinenrechner auf das am Schlepper angeordnete Anzeigeterminal übertragen und von diesem angezeigt. Der Schlepperführer ist somit stets unverzüglich über die aktuellen Feldbearbeitungsparameter informiert und kann gegebenenfalls entsprechend eingreifen.

In Weiterbildung der Erfindung können die Feldbearbeitungsdaten auch von dem Maschinenrechner gespeichert, nach der Feldbearbeitung vorzugsweise an einem an den Maschinenrechner anschließbaren Drucker ausgegeben und/oder abrufbar bereitgestellt werden, so dass die Feldbearbeitungsdaten gegebenenfalls durch einen zentralen Rechner abgerufen oder ausgewertet werden können.

Gemäß einem weiteren vorteilhaften Aspekt der vorliegenden Erfindung können die schlepperseitig bereitgestellten Betriebsparameter des Schleppers von dem Jobrechner an der Landmaschine auch dazu verwendet werden, Maschinenparameter der Landmaschine zu steuern. Grundsätzlich könnte die Steuerung durch den Jobrechner an der Landmaschine allein anhand der vom Schlepperrechner bereitgestellten Betriebsparameter des Schleppers erfolgen. Vorzugsweise stützt sich der Jobrechner der Landmaschine für die Steuerung der Landmaschine sowohl auf die vom Schlepperrechner bereitgestellten Betriebsparameter des Schleppers als auch auf die landmaschinenseitig ermittelten Betriebsparameter, so dass im Sinne einer Regelung eine rückkoppelnde Steuerung durchgeführt werden kann.

Als Betriebsparameter des Schleppers können insbesondere Fahrgeschwindigkeit, Zugkraft und/oder Zugpunkt der Landmaschine am Schlepper vom Schlepperrechner bereitgestellt und vom Landmaschinenrechner für die Steuerung der Landmaschine berücksichtigt werden. Verschiedene Maschinensteuerparameter können bestimmt werden. So kann der Landmaschinenrechner anhand der vom Schlepperrechner bereitgestellten Betriebsparameter und der landmaschinenseitig erfassten Betriebsparameter hydraulische Aktoren der Landmaschine zur Einstellung von Zugpunkt, Schnittbreite, Vorfurche, Sturz, Schnitttiefe, Wendestellung und/oder Transportstellung ansteuern.

Nachfolgend wird die Erfindung anhand einer bevorzugten Ausführungsform und zugehöriger Zeichnungen näher erläutert. In diesen zeigen:
- Fig. 1:: einen Schlepper mit daran angehängtem Wendepflug, und
- Fig. 2:: einen schematischen Schaltplan der Vorrichtung zur Bestimmung von Feldbearbeitungsparametern und Maschinen-Steuerparametem gemäß einer bevorzugten Ausführung der Erfindung, die die Verbindung eines Schlepperrechners und eines landmaschinenseitig vorgesehenen Jobrechners zeigt.

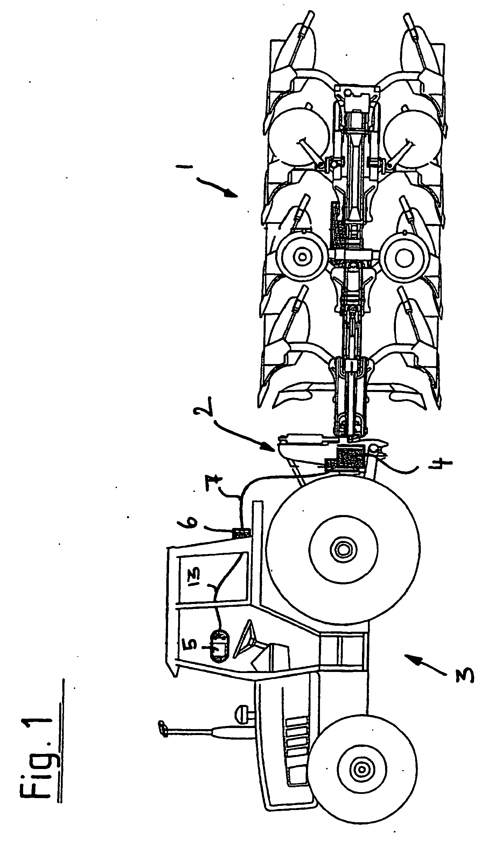

Gemäß der in Figur 1 gezeichneten bevorzugten Ausführungsform der Erfindung ist als Landmaschine ein Anbaupflug 1 vorgesehenen, der mittels eines Dreipunktgestänges 2 am Heck des Schleppers 3 angebaut ist. Es versteht sich, dass grundsätzlich auch eine Landmaschine im Frontanbau vorgesehen sein kann. Wie Figur 1 zeigt, ist der Pflugkorpus um eine im wesentlichen horizontale Schwenkachse in an sich bekannter Weise wendbar, wobei das zugehörige Drehwerk einen hydraulischen Drehwerkzylinder besitzt. Weitere Aktoren in Form von Hydraulikzylindem zur Einstellung verschiedener Maschinenparameter sind vorgesehen, ohne eigens gezeichnet zu sein. Dies können sein ein Zugpunktzylinder zur Einstellung des Zugpunkts des Pfluges, ein Vorfurchenzylinder zur Einstellung der Vorfurche, sowie ein Schnittbreitenzylinder zur Einstellung der Schnittbreite. Die genannten Aktoren sind von einem elektronischen Jobrechner 4, der am Pflug 1 angebracht ist, ansteuerbar. Der genannte Jobrechner 4 bzw. entsprechende damit verbundene Erfassungsmittel erfassen die Ist-Werte der Maschinenparameter wie Schnittbreite, Schnitttiefe, eingestellter Zugpunkt, Vorfurche etc. Wie Figur 1 zeigt, ist der Jobrechner 4 mit einem Bedienungs- und Anzeigeterminal 5 verbunden, das in dem Führerhaus des Schleppers 3 angeordnet ist. Einerseits werden über ein Display des Bedienungs- und Anzeigeterminals 5 die aktuell eingestellten Betriebsparameter des Pfluges 1 angezeigt. Zum anderen können über das Bedienungs- und Anzeigeterminal 5 Einstellungen eingegeben werden, die sodann vom Jobrechner 4 in Steuerbefehle an die entsprechenden Aktoren umgesetzt werden.

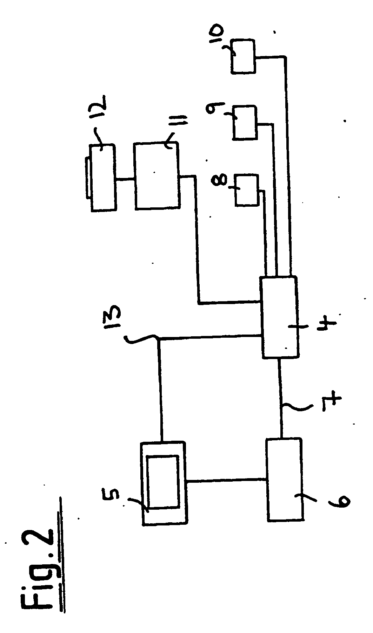

Wie Figur 2 zeigt, ist am Schlepper 3 weiterhin ein elektronischer Schlepperrechner 6 vorgesehen. Mit Hilfe nicht eigens dargestellter Erfassungsmittel erfasst der Schlepperrechner 6 Schlepper-Betriebsparameter wie Fahrgeschwindigkeit, Zeit, Zugkraft des Schleppers, die am heckseitigen Anbaubock aufgewendet wird, Benzinverbrauch etc. In an sich bekannter Weise kann der Schlepperrechner 6 darüber hinaus den effektiven Führungspunkt des am Schlepper angebauten Pfluges bestimmen. Bezüglich der Bestimmung des effektiven Führungspunktes, der sich durch die am Dreipunktgestänge bzw. Anbaubock ergebenden Kräfte bestimmen lässt, wird explizit auf die DE 196 39 573 A1 verwiesen, auf deren Gegenstand insoweit Bezug genommen wird.

Wie Figur 2 zeigt, ist auch der Schlepperrechner 6 mit dem Bedienungs- und Anzeigeterminal 5 verbunden. Einerseits können so die schlepperseitigen Betriebsparameter angezeigt werden. Andererseits kann der Schlepperführer entsprechende Einstellungen vornehmen, die dann vom Schlepperrechner 6 umgesetzt werden.

Der Jobrechner 4 am Pflug 1 ist mit dem Schlepperrechner 6 verbunden, was durch ein geeignetes Datenübertragungskabel 7 bewerkstelligt sein kann. Hierdurch kann der Jobrechner 4 die vom Schlepperrechner 6 bereitgestellten Betriebsdaten des Schleppers vom Schlepperrechner 6 herunterziehen und weiterverarbeiten. Insbesondere kann der Jobrechner 4 die vom Schlepperrechner 6 bereitgestellten Betriebsdaten mit den landmaschinenseitig erfassten Betriebsdaten verknüpfen und auswerten. Wie Figur 2 zeigt, werden an den Jobrechner 4 weiterhin die Signale schlepperseitig vorgesehener Erfassungsmittel 8, 9 und 10 eingespeist. Dies können Sensoren sein, die die zuvor erwähnten Maschinenparameter wie Schnittbreite, Schnitttiefe, Vorfurche etc. erfassen. Die Erfassungsmittel 8, 9 und 10 können auch von den entsprechenden Aktoren in Form von Hydraulikzylindem gebildet sein, deren Ist-Werte sodann als Maschinenbetriebsparameter an den Jobrechner 4 gespeist werden.

Aus den vom Schlepperrechner 6 bereitgestellten Betriebsdaten des Schleppers und den am Pflug 1 erfassten Betriebsparametern des Pflugs können verschiedene Feldbearbeitungsparameter bestimmt werden. Vorzugsweise bestimmt der Jobrechner 4 die Arbeitsleistung bestimmende Größen wie Tagesstunden, Tagesfläche, Gesamtstunden, Gesamtfläche oder Flächenleistung, die bei der Feldbearbeitung mit dem Pflug 1 erzielt wurden. Vom Schlepperrechner 6 werden hierzu ein Geschwindigkeitssignal, das die Fahrgeschwindigkeit des Schleppers angibt, ein Zeitsignal sowie ein Hubwerkssignal bereitgestellt, das angibt, wann das Hubwerk in seiner unteren Stellung und damit der Pflug 1 in seiner Arbeitsstellung ist. Anhand der schlepperseitig bestimmten Schnittbreite des Pflugs 1 kann die Fläche aus dem Produkt Geschwindigkeitssignal x Zeitsignal x Schnittbreite bestimmt werden. Das Zeitsignal wird zuvor mit dem Hubwerkssignal verknüpft, so dass nur die aktiven Zeiten des Pflugs erfasst werden. Die Flächenleistung kann in entsprechender Weise bestimmt werden.

Ferner kann der Jobrechner 4 anhand der vom Schlepperrechner 6 bereitgestellten Betriebsdaten des Schleppers und den erfassten Ist-Werten der Maschinenparameter des Pflugs 1 die Aktoren in Form hydraulischer Stellzylinder des Pflugs 1 entsprechend eines im Jobrechner 4 abgespeicherten Steuer- bzw. Regelungsprogramms ansteuern.

Wie Figur 2 weiterhin zeigt, können die bestimmten Feldbearbeitungsparameter, insbesondere die erreichte Arbeitsleistung, an dem Bedienungs- und Anzeigeterminal 5 angezeigt werden, so dass der Schlepperführer stets unmittelbar informiert ist. Ergänzend oder alternativ hierzu können die vom Jobrechner 4 bestimmten Feldbearbeitungsparameter in anderer Weise ausgegeben werden. Sie können z. B. auf einen externen, stationären Auswerterechner 11 übertragen und/oder an einem mit dem Jobrechner 4 verbindbaren Drucker 12 ausgedruckt werden.

## Patentansprüche

1. Verfahren zur Bestimmung von Feldbearbeitungsparametern betreffend eine Feldbearbeitung durch einen Schlepper (3) und einen davon gezogenen Pflug, wobei von einem an dem Schlepper (3) vorgesehenen Schlepperrechner (6) und damit verbundenen Erfassungsmitteln während der Feldbearbeitung Betriebsparameter des Schleppers erfasst und bereitgestellt werden und von einem an dem Pflug (1) vorgesehenen Maschinenrechner (4), und damit verbundenen Erfassungsmitteln (8, 9, 10) Betriebsparameter des Pflugs erfasst werden, **dadurch gekennzeichnet, dass** die vom Schlepperrechner (6) bereitgestellten Betriebsparameter des Schleppers umfassend die zurückgelegte Wegstrecke auf den Maschinenrechner (4) übertragen werden, dass die übertragenen Betriebsparameter des Schleppers (3) mit den erfassten Betriebsparametern des Pflugs (1) umfassend die erfasste effektive Arbeitsbreite des Pflugs durch den Maschinenrechner (4) miteinander verknüpft werden und dass aus den miteinander verknüpften Betriebsparametern des Schleppers und des Pflugs die gewünschten Feldbearbeitungsparameter bestimmt werden, wobei vom Maschinenrechner (4) aus dem Produkt der vom Schlepperrechner bereitgestellten Wegstrecke mit der effektiven Arbeitsbreite die vom Pflug bearbeitete Fläche bestimmt wird, wobei eine aktuelle Arbeitsstellung des Pflugs erfasst und daraus die Intervalle, in denen der Pflug aktiv arbeitet, bestimmt werden, wobei der Maschinenrechner (4) bei seiner Berechnung der gewünschten Feldbearbeitungsparameter betreffend die Arbeitsleistung nur die Zeiten berücksichtigt, in denen der Pflug aktiv arbeitet.

2. Verfahren nach dem vorhergehenden Anspruch, wobei die Feldbearbeitungsparameter während der Feldbearbeitung bestimmt, von dem Maschinenrechner (4) auf ein am Schlepper angeordnetes Terminal (5) übertragen und von einem Display des Terminals (5) angezeigt werden.

3. Verfahren nach einem der vorhergehenden Ansprüche, wobei die Feldbearbeitungsparameter von dem Maschinenrechner (4) gespeichert, nach der Feldbearbeitung ausgedruckt und/oder abrufbar bereitgestellt werden.

4. Verfahren nach einem der vorhergehenden Ansprüche, wobei zusätzlich zu und/oder anstelle der Bestimmung der Feldbearbeitungsparameter anhand der von dem Schlepperrechner (6) an den Maschinenrechner (4) übertragenen Betriebsparametern des Schleppers Maschinen-Steuerparameter von dem Landmaschinenrechner 4 bestimmt werden.

5. Verfahren nach dem vorhergehenden Anspruch, wobei als Betriebsparameter des Schleppers (3) Fahrgeschwindigkeit, Zugkraft und/oder Zugpunkt der Landmaschine (1) am Schlepper (3) bereitgestellt werden.

6. Verfahren nach einem der beiden vorhergehenden Ansprüche, wobei Maschinen-Steuerparameter zur Steuerung bzw. Regelung von Zugpunkt, Schnittbreite, Schnitttiefe, Vorfurche, Wendeposition und/oder Transportstellung des Pfluges (1) bestimmt werden.

7. Vorrichtung zur Bestimmung von Feldbearbeitungsparametern bei einer Feldbearbeitung durch einen Schlepper (3) und einen davon gezogenen. Pflug, mit einem am Schlepper (3) vorgesehenen Schlepperrechner (6) und damit verbundenen Erfassungsmitteln zur Erfassung und Bereitstellung von Betriebsparametern des Schleppers (3) während der Feldbearbeitung, und einem an dem Pflug (1) vorgesehenen Maschinenrechner (4) und damit verbundenen Erfassungsmitteln (8, 9, 10) zur Erfassung von Betriebsparametern der Landmaschine während der Feldbearbeitung, **dadurch gekennzeichnet, dass** der Schlepperrechner (6) mit dem Maschinenrechner (4) über eine Datenübertragungseinrichtung (7) zur Übertragung der vom Schlepperrechner bereitgestellten Betriebsparameter auf den Maschinenrechner verbunden ist, dass der Maschinenrechner (4) Mittel zur Verknüpfung der vom Schlepperrechner (6) bereitgestellten Betriebsparametern mit den erfassten Betriebsparametern des Pflugs aufweist und dass der Maschinenrechner (4) Auswertemittel zur Auswertung der verknüpften Betriebsparameter des Schleppers und des Pflugs sowie zur Bestimmung der gewünschten Feldbearbeitungsparameter aufweist, wobei an dem Pflug Erfassungsmittel (8) zur Erfassung einer effektiven Arbeitsbreite des Pflugs guer zur Fahrtrichtung vorgesehen sind, wobei der Schlepperrechner (6) und die damit verbundenen Erfassungsmittel eine bei der Flächenbearbeitung zurückgelegte Wegstrecke bereitstellen und der Maschinenrechner (4) Mittel zur Bestimmung einer bearbeiteten Fläche aus der zurückgelegten Wegstrecke und der erfassten effektiven Arbeitsbreite aufweist, wobei an der Landmaschine (1) und/oder an dem Schlepper (3) Erfassungsmittel zur Erfassung einer aktuellen Arbeitsstellung des Pflugs, in der die Landmaschine aktiv arbeitet, vorgesehen sind und der Maschinenrechner (4) derart ausgebildet ist, dass bei der Bestimmung der gewünschten Feldbearbeitungsparameter betreffend die Arbeitsleistung nur die Zeiten berücksichtigt werden, in denen der Pflug in der aktiv arbeitenden Arbeitsstellung das Feld bearbeitet.

8. Vorrichtung nach dem vorhergehenden Anspruch, wobei ein Bedienungs- und Anzeigeterminal (5) an dem Schlepper (3) vorgesehen ist, das mit dem Maschinenrechner (4) und mit dem Schlepperrechner (6) durch Datenübertragungsmittel (13) verbunden ist.

9. Vorrichtung nach dem vorhergehenden Anspruch, wobei der Maschinenrechner (4) derart ausgebildet ist, dass die Feldbearbeitungsdaten unmittelbar während der Feldbearbeitung bestimmt und auf das am Schlepper angeordnete Bedienungs- und Anzeigeterminal (5) übertragen werden.

10. Vorrichtung nach einem der vorhergehenden Ansprüche, wobei der Maschinenrechner (4) einen Speicher zur Speicherung der Feldbearbeitungsdaten und/oder eine Datenübertragungsschnittstelle zur Übertragung der Feldbearbeitungsdaten aufweist.

11. Vorrichtung nach einem der vorhergehenden Ansprüche, wobei der Maschinenrechner Ansteuermittel zur Ansteuerung von Landmaschinenparameter einstellenden Aktoren, insbesondere hydraulischen Stellzylindern, in Abhängigkeit von durch den Schlepperrechner (6) bereitgestellten Betriebsparametern des Schleppers (3) aufweist.

12. Vorrichtung nach dem vorhergehenden Anspruch, wobei der Maschinenrechner (4) Ansteuermittel zur Ansteuerung eines Schnittbreitenzylinders, eines Zugpunktzylinders, eines Vorfurchenzylinders, eines Sturzzylinders, eines Schnitttiefenzylinders, eines Wendezylinders und/oder eines Transportstellungszylinders aufweist.

## Claims

1. A method for determining field working parameters relating to field working by a tractor (3) and a plough, pulled by it, wherein operating parameters of the tractor are detected and made available during the field working by a tractor processor (6) provided at the tractor (3) and detection means connected thereto and operating parameters of the plough are detected by a machinery processor (4) provided at the plough (1) and detections means (8, 9, 10) connected thereto, **characterised in that** the operating parameters of the tractor made available by the tractor processor (6) comprising the covered distance are transmitted to the machinery processor (4); **in that** the transmitted operating parameters of the tractor (3) are linked to the detected operating parameters of the plough (1) comprising the detected effective working width of the plough by the machinery processor (4); and **in that** the desired field working parameters are determined from the operating parameters of the tractor and of the plough linked to one another, wherein the area worked by the plough is determined by the machinery processor (4) from the product of the distance made available by the tractor processor and the effective working width, wherein a current working position of the plough is detected and the intervals in which the plough actively works are determined therefrom, wherein the machinery processor (4), in its calculation of the desired field working parameters relating to the working capacity, only takes into account those times at which the plough actively works.

2. A method in accordance with the preceding claim, wherein the field working parameters are determined during the field working, are transmitted by the machinery processor (4) to a terminal (5) arranged at the tractor and are displayed by a display of the terminal (5).

3. A method in accordance with any one of the preceding claims, wherein the field working parameters are stored, are printed and/or are made available to be called up by the machinery processor (4) after the field working.

4. A method in accordance with any one of the preceding claims, wherein machinery control parameters are determined by the agricultural machinery processor 4 in addition to and/or instead of the determination of the field working parameters using the operating parameters of the tractor transmitted to the machinery processor (4) by the tractor processor (6).

5. A method in accordance with the preceding claim, wherein travel speed, tractive force and/or tractive point of the agricultural machinery (1) is made available at the tractor (3) as the operating parameters of the tractor (3).

6. A method in accordance with any one of the two preceding claims, wherein machinery control parameters are determined for the control or regulation of tractive point, cutting width, cutting depth, pre-furrow, turning position and/or transport position of the plough (1).

7. An apparatus for the determination of field working parameters on field working by a tractor (3) and a plough, pulled by it, having a tractor processor (6) provided at the tractor (3) and detection means connected thereto for the detection and making available of operating parameters of the tractor (3) during the field working and having a machinery processor (4) provided at the plough (1) and detection means (8, 9, 10) connected thereto for the detection of operating parameters of the agricultural machinery during the field working, **characterised in that** the tractor processor (6) is connected to the machinery processor (4) via a data transmission device (7) for the transmission of the operating parameters made available by the tractor processor to the machinery processor; **in that** the machinery processor (4) has means for the linking of the operating parameters made available by the tractor processor (6) with the detected operating parameters of the plough; and **in that** the machinery processor (4) has evaluation means for the evaluation of the linked operating parameters of the tractor and of the plough and for the determination of the desired field working parameters, wherein detection means (8) for the detection of an effective working width of the plough are provided transversely to the direction of travel on the plough, wherein the tractor processor (6) and the detection means connected thereto make available a distance covered in the area working and the machinery processor (4) has means for the determination of a worked area from the distance covered and the detected effective working width, wherein detections means are provided at the agricultural machinery (1) and/or at the tractor (3) for the detection of a current working position of the plough in which the agricultural machinery is actively working, and the machinery processor (4) is configured such that, on the determination of the desired field working parameters relating to the working capacity, only those times are taken into account at which the plough is working the field in the actively working work position.

8. An apparatus in accordance with the preceding claim, wherein an operating and display terminal (5) is provided at the tractor (3) and is connected via data transmission means (13) to the machinery processor (4) and to the tractor processor (6).

9. An apparatus in accordance with the preceding claim, wherein the machinery processor (4) is made such that the field working data are determined directly during the field working and are transmitted to the operating and display terminal (5) arranged at the tractor.

10. An apparatus in accordance with any one of the preceding claims, wherein the machinery processor (4) has a memory for the storage of the field working data and/or has a data transmission interface for the transmission of the field working data.

11. An apparatus in accordance with any one of the preceding claims, wherein the machinery processor has control means for the controlling of actuators, in particular hydraulic setting cylinders, setting agricultural machinery parameters in dependence on operating parameters of the tractor (3) made available by the tractor processor (6).

12. An apparatus in accordance with the preceding claim, wherein the machinery processor (4) has control means for the controlling of a cutting width cylinder, of a pre-furrow cylinder, of a camber cylinder, of a cutting depth cylinder, of a turn cylinder and/or of a transport position cylinder.

## Revendications

1. Procédé pour la détermination des paramètres pour les travaux des champs concernant des travaux des champs par un tracteur (3) et une charrue tirée par celui-ci, où sont détectés et mis à disposition par un calculateur de tracteur (6) prévu au tracteur (3) et des moyens de détection liés à celui-ci, pendant les travaux des champs, des paramètres de fonctionnement du tracteur, et sont détectés par un calculateur de machine (4) prévu à la charrue (1) et des moyens de détection (8, 9, 10) liés à celui-ci, des paramètres de fonctionnement de la charrue, **caractérisé en ce que** les paramètres de fonctionnement du tracteur, mis à disposition par le calculateur de tracteur (6), comprenant le chemin parcouru, sont transférés au calculateur de machine (4), **en ce que** les paramètres de fonctionnement transférés du tracteur (3) sont liés aux paramètres de fonctionnement détectés de la charrue (1), comprenant la largeur de travail effective détectée de la charrue, par le calculateur de machine (4), et **en ce que**, à partir des paramètres de fonctionnement liés entre eux du tracteur et de la charrue, les paramètres souhaités pour les travaux des champs sont déterminés, où le calculateur de machine (4) détermine à partir du produit du chemin mis à disposition par le calculateur de tracteur, avec la largeur de travail effective, la surface traitée par la charrue, où une position de travail actuelle de la charrue est détectée, et à partir de celle-ci, les intervalles, durant lesquels la charrue travaille de manière active, sont déterminés, où le calculateur de machine (4), lors de son calcul des paramètres pour les travaux des champs recherchés concernant la performance de travail, prend en compte seulement les durées durant lesquelles la charrrue travaille d'une manière active.

2. Procédé selon la revendication précédente, où les paramètres pour les travaux des champs sont déterminés pendant les travaux des champs, sont transférés par le calculateur de machine (4) à un terminal (5) disposé au tracteur et sont affichés sur un écran d'affichage du terminal (5).

3. Procédé selon l'une des revendications précédentes, où les paramètres pour les travaux des champs sont stockés par le calculateur de machine (4), sont imprimés après les travaux des champs et/ou sont mis à disposition en vue d'être appelés.

4. Procédé selon l'une des revendications précédentes, où sont déterminés de plus et/ou à la place de la détermination des paramètres pour les travaux des champs, à l'aide des paramètres de fonctionnement du tracteur transmis par le calculateur de tracteur (6) au calculateur de machine (4), des paramètres de commande de machine par le calculateur (4) de la machine agricole.

5. Procédé selon la revendication précédente, où sont mis à disposition, comme paramètres de fonctionnement du tracteur (3), la vitesse de roulement, la force de traction et/ou le point de traction de la machine agricole (1) au tracteur (3).

6. Procédé selon l'une des deux revendications précédentes, dans lequel sont déterminés des paramètres de commande de machine pour la commande respectivement le réglage du point de traction, de la largeur de coupe, de la profondeur de coupe, du sillon avant, de la position de renversement et/ou de la position de transport de la charrue (1).

7. Dispositif pour la détermination des paramètres pour les travaux des champs dans le cas de travaux des champs par un tracteur (3) et une charrue (1) tirée par celui-ci, avec un calculateur de tracteur (6) prévu au tracteur (3) et des moyens de détection reliés à celui-ci pour la détection et la mise à disposition de paramètres de fonctionnement du tracteur (3) pendant les travaux des champs, et avec un calculateur de machine (4) prévu à la charrue (1) et des moyens de détection (8, 9, 10) reliés à celui-ci pour la détection de paramètres de fonctionnement de la machine agricole pendant les travaux des champs, **caractérisé en ce que** le calculateur de tracteur (6) est relié au calculateur de machine (4) par une installation de transmission de données (7) pour la transmission des paramètres de fonctionnement mis à disposition par le calculateur de tracteur au calculateur de machine, **en ce que** le calculateur de machine (4) présente des moyens pour lier les paramètres de fonctionnement mis à disposition par le calculateur de tracteur (6) aux paramètres de fonctionnement détectés de la charrue, et **en ce que** le calculateur de machine (4) présente des moyens d'évaluation pour évaluer les paramètres de fonctionnement liés du tracteur et de la charrue et pour déterminer les paramètres de traitement de champs recherchés, où sont prévus à la charrue des moyens de détection (8) pour la détection d'une largeur de travail effective de la charrue transversalement à la direction d'avancement, où le calculateur de tracteur (6) et les moyens de détection liés à celui-ci mettent à disposition un chemin parcouru lors du traitement de surface, et le calculateur de machine (4) présente des moyens pour la détermination d'une surface traitée à partir du chemin parcouru et de la largeur de travail effective détectée, où sont prévus à la machine agricole (1) et/ou au tracteur (3) des moyens de détection pour la détection d'une position de travail actuelle de la charrue, dans laquelle la machine agricole travaille d'une manière active, et **en ce que** le calculateur de machine (4) est réalisé de façon que lors de la détermination des paramètres de traitement de champ recherchés, concernant la performance de travail, seulement les durées sont prises en compte durant lesquelles la charrue, dans la position de travail fonctionnant de manière active, traite le champ.

8. Dispositif selon la revendication précédente, où est prévu un terminal de commande et d'affichage (5) au tracteur (3) qui est relié au calculateur de machine (4) et au calculateur de tracteur (6) par des moyens de transmission de données.

9. Dispositif selon la revendication précédente, où le calculateur de machine (4) est réalisé de telle sorte que les données pour les travaux des champs sont déterminées directement pendant les travaux des champs et sont transférées au terminal de commande et d'affichage (5) disposé au tracteur.

10. Dispositif selon l'une des revendications précédentes, où le calculateur de machine (4) présente une mémoire pour le stockage des données pour les travaux des champs et/ou une interface de transmission de données pour la transmission des données de travaux des champs.

11. Dispositif selon l'une des revendications précédentes, où le calculateur de machine présente des moyens de commande pour la commande d'acteurs réglant des paramètres de la machine agricole, en particulier des cylindres de positionnement hydrauliques, en fonction des paramètres de fonctionnement du tracteur (3) mis à disposition par le calculateur de tracteur (6).

12. Dispositif selon la revendication précédente, où le calculateur de machine (4) présente des moyens de commande pour la commande d'un cylindre de largeur de coupe, d'un cylindre de point de traction, d'un cylindre de sillon avant, d'un cylindre de chute, d'un cylindre de profondeur de coupe, d'un cylindre de réversion et/ou d'un cylindre de position de transport.
